# EUROPÄISCHE PATENTSCHRIFT

(11) **EP 1 624 184 B1**
(45) Veröffentlichungstag und Bekanntmachung des Hinweises auf die Patenterteilung: **22.05.2013**
(21) Anmeldenummer: 05016848.3
(22) Anmeldetag: 03.08.2005
(51) Int. Cl.: F03B 3/02, F03B 11/04, F03B 3/12, F03B 3/04, F03B 3/06

(54) **Hydraulische Turbine oder Pumpturbine**
Hydraulic turbine or pump turbine
Turbine hydraulique ou turbine-pompe

(30) Priorität: 05.08.2004 DE 102004037985
(43) Veröffentlichungstag der Anmeldung: 08.02.2006
(73) Patentinhaber: Voith Hydro Holding GmbH & Co. KG, 89522 Heidenheim (DE)
(72) Erfinder: Scherer, Thomas, Dr., 89522 Heidenheim (DE); Byrne, Michael, Dallastown Pennsylvania (US)
(74) Vertreter: Weitzel, Wolfgang

(56) Entgegenhaltungen:
- EP-A1- 1 209 356
- WO-A1-03/054386
- WO-A2-03/025385
- DE-B- 1 087 090
- FR-A- 1 405 696

## Beschreibung

Die Erfindung betrifft eine hydraulische Turbine oder eine hydraulische Pumpturbine mit einem Laufrad, das eine Vielzahl von Schaufeln aufweist und mit einer Welle drehfest verbunden ist. Das Laufrad weist eine Nabe auf. Dabei kommen Maschinen beider Arten nach dem Francis-Prinzip in Betracht.

Maschinen der genannten Art haben ihren optimalen Wirkungsgrad bei einem bestimmten Betriebszustand, im allgemeinen bei Volllast. Außerhalb dieses optimalen Betriebszustandes ist der Wirkungsgrad geringer. Außerdem kommt es zu unerwünschten Erscheinungen wie Druckschwankungen im Strömungsrohr, unruhigem Lauf, Ausbilden eines Kavitationszopfes.

Es sind zahlreiche Maßnahmen bekannt geworden. Gemäß EP 621 923 B1 ist ein Laufrad mit einem Leitelement versehen, das unabhängig von der Umdrehung des Laufrades gelagert und verdrehbar ist.

EP 1 209 356 A1 beschreibt eine Turbine oder Pumpturbine, bei welcher die Laufradnabe in ihrer Gesamtheit gegenüber dem übrigen Laufrad im Stillstand und/oder im Betrieb in axialer Richtung verschiebbar ist, womit es möglich sein soll, bei einem gegebenen Betriebszustand Betriebsparameter wie Drücke, Schwingungen und so weiter zu optimieren.

Weitere Turbinen und Pumpturbinen sind beispielsweise aus
DE 1 087 090
EP 1 209 356
FR 1405 696
WO 03 025385
WO 03 054386
bekannt geworden.

Die genannten Maßnahmen sind entweder nicht in genügendem Maße wirksam, oder sie sind aufwendig und teuer.

Der Erfindung liegt die Aufgabe zugrunde, eine hydraulische Turbine oder eine hydraulische Pumpturbine derart zu gestalten, dass die Strömung mit einfachen Mitteln über einen breiten Betriebsbereich stabil gehalten werden kann. Insbesondere soll bei hohem Wirkungsgrad erreicht werden, dass nachteilige Einflüsse ausgeschaltet werden, insbesondere das Auftreten von Druckschwankungen im Saugrohr, das Ausbilden eines sogenannten Kavitationszopfes oder Teillastzopfes, oder ein unruhiger Lauf der Maschine. Diese Aufgabe wird durch die Merkmale der Ansprüche gelöst.

Die Erfindung ist anhand der Zeichnung näher erläutert. Darin ist im einzelnen Folgendes dargestellt:
- Figur 1: zeigt in einem Axialschnitt die wesentlichen Teile eines Laufrades einer Francis-Turbine mit einer geteilten Nabe, deren unteres Teil axial verschiebbar ist.
- Figur 2: zeigt wiederum in einem Axialschnitt ein ähnliches Laufrad, bei welchem die Nabe ebenefalls geteilt, und unabhängig von der Umdrehung des übrigen Laufrades um die Längsachse des Laufrades verdrehbar ist.
- Figur 3: zeigt einen Axialschnitt durch die Nabe eines Laufrades, dessen Wandung aus Schwenkelementen aufgebaut ist.

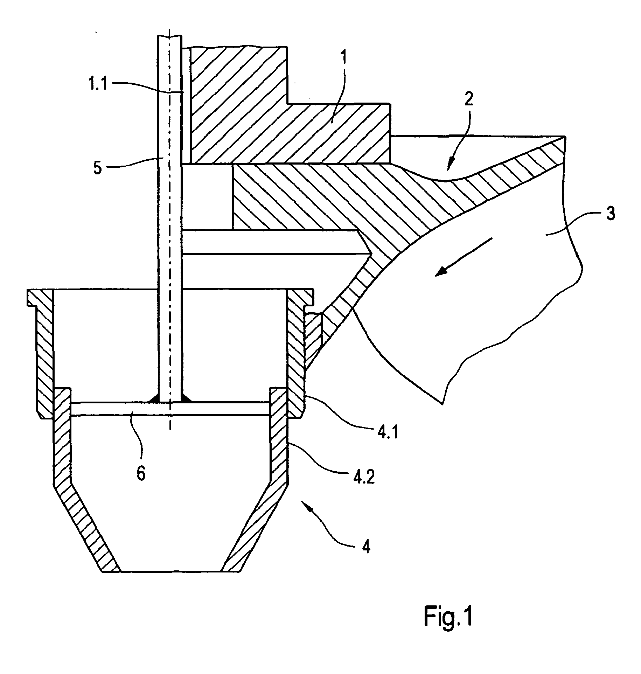

Das in Figur 1 gezeigte Laufrad umfasst eine Turbinenwelle 1 sowie ein Laufrad 2. Laufrad 2 trägt eine Vielzahl von Turbinenschaufeln 3. Man erkennt ferner eine Laufradnabe 4. Die Turbinenschaufeln 3 sind beim Betrieb gemäß dem dort gezeigten Pfeil von Wasser durchströmt.

Man erkennt ferner eine Laufradnabe 4, umfassend die beiden Nabenteile 4.1 und 4.2.

Das untere Nabenteil 4.2 ist in seinem oberen Bereich vom oberen Nabenteil 4.1 umschlossen. Es ist auf und ab bewegbar, somit in Richtung der Laufradachse.

Eine Steuerstange 5 ist durch eine Bohrung 1.1 in der Turbinenwelle hindurchgeführt. Sie greift mit ihrem unteren Ende an einer Traverse 6 an. Traverse 6 ist mit dem unteren Nabenteil 4.2 fest verbunden.

Die Steuerstange 5 weist einen hier nicht gezeigten Axialantrieb auf, mit welchem sie in axialer Richtung verschiebbar ist. Mit einem solchen Verschieben wird auch zugleich das untere Nabenteil 4.2 axial verschoben. Die beiden Nabenteile 4.1 und 4.2 gleiten somit teleskopartig ineinander. Das obere Nabenteil 4.1 ist ringförmig, während das untere Nabenteil 4.2 topfförmig ist. Es wäre auch denkbar, die Nabe 4 aus mehr als zwei Teilen aufzubauen, die jeweils koaxial zueinander angeordnet sind, und von denen wenigstens zwei relativ zueinander verschiebbar sind.

Die Außenkontur der Nabe 4 kann auch anders ausgeführt sein, als hier dargestellt. Es ist auch möglich, die Nabe auszutauschen, so dass sie von Fall zu Fall eine andere Gestalt hat.

Das obere oder das untere Nabenteil können drehbar gelagert sein und einen Drehantrieb aufweisen - hier nicht gezeigt. Die Nabe lässt sich somit in Umlauf versetzen oder festhalten, je nach Betriebszuständen, und zwar unabhängig vom Umlauf des übrigen Laufrades. So kann die Nabe beziehungsweise das betreffende Nabenteil in entgegengesetztem Drehsinn in Umlauf versetzt werden sowie mit einer anderen Drehzahl, als das übrige Laufrad.

Durch die Axialverschiebung eines Teiles der Nabe, im vorliegenden Falle von Nabenteil 4.2, lässt sich das Betriebsverhalten der Turbine verändern. Dies kommt vor allem beim Fahren im Teillastbereich in Betracht. Hierdurch lässt sich die Strömung stabilisieren.

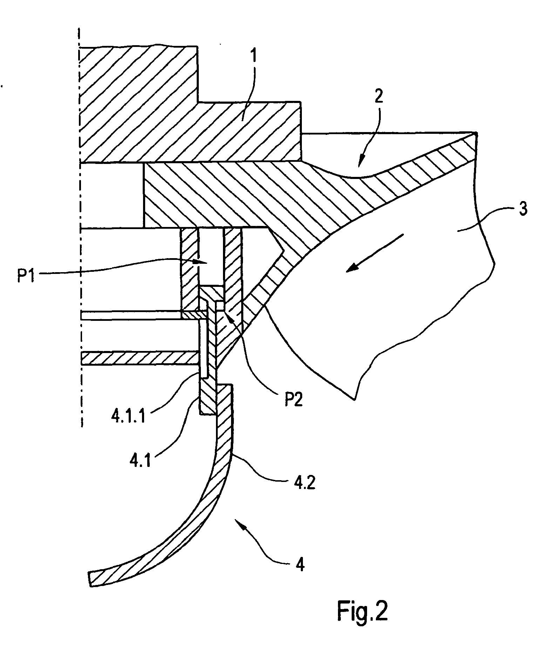

Bei der Ausführungsform gemäß Figur 2 ist die Nabe 4 wiederum zweigeteilt. Siehe die beiden Teile 4.1 und 4.2. Dabei ist das untere Teil 4.2 tassenförmig gestaltet.

Das obere Nabenteil 4.1 ist um die Längsachse des Laufrades 2 verdrehbar. Hierzu weist das obere Nabenteil 4.1 eine Verzahnung 4.1.1 auf. Diese kämmt mit einem Stirnrad 10. Das obere Nabenteil 4.1 ist gleichzeitig in axialer Richtung verschiebbar. Im oberen Bereich ist es als Kolben ausgebildet, der in einer Kammer auf- und abfahrbar ist. Die Kammer ist mit Drücken P1 und P2 beaufschlagbar, um eine Auf- und Abbewegung zu erzielen.

Alternativ zu der Ausführungsform gemäß Figur 2 könnte auch das untere Nabenteil 4.2 axial verschiebbar sein. Außerdem könnte es mit einem Drehantrieb ausgerüstet sein, statt des Drehantriebs von Nabenteil 1, oder zusätzlich zu diesem.

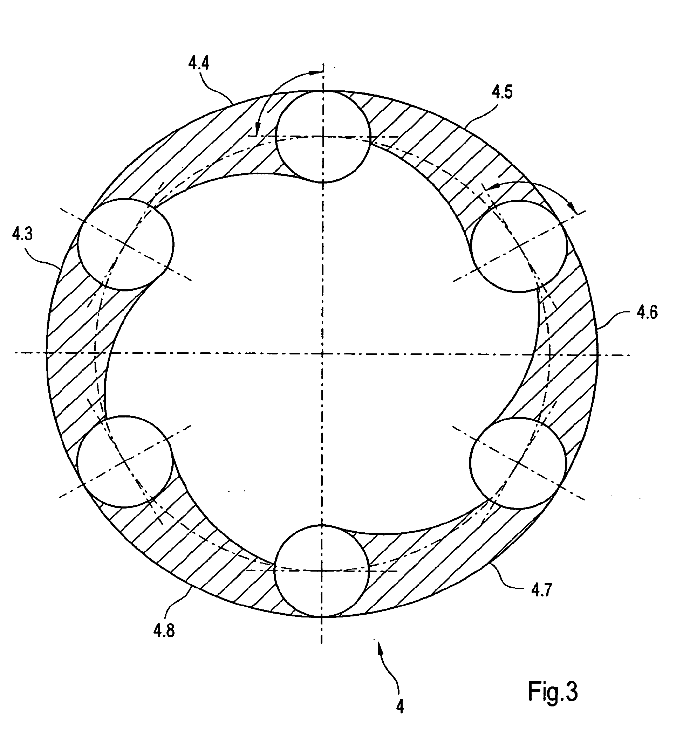

Bei der Ausführungsform gemäß Figur 3 ist eine Nabe dargestellt, gegenüber den Figuren 1 und 2 in vergrößertem Maßstab. Die Nabe umfasst eine Mehrzahl von Schwenkelementen - im vorliegenden Falle sechs Elemente 4.3 bis 4.8. Jedes Element ist mit einem entsprechenden Lagerzapfen versehen und um dessen Längsachse nach außen ausschwenkbar, so dass der Durchmesser der Nabe 4 vergrößert wird. Die Nabe kann im vorliegenden Falle von einer dehnbaren Manschette umschlossen sein.

### Bezugszeichenliste

- 1: Turbinenwelle
- 2: Laufrad
- 3: Turbinenschaufeln
- 4: Laufradnabe
- 4.1: oberes Nabenteil
- 4.1.1: Verzahnung des oberen Nabenteiles
- 4.2: unteres Nabenteil
- 4.3 - 4.8: Schwenkelemente
- 5: Steuerstange
- 6: Traverse
- 10: Stirnrad

## Patentansprüche

1. Hydraulische Turbine oder hydraulische Pumpe;
mit einem Laufrad (2), das eine Vielzahl von Schaufeln (3) aufweist;
mit einer Laufradnabe (4);
wenigstens ein axialer Abschnitt der Nabenwand weist eine Umfangsfläche auf, die nach Art einer Irisblende aus Schwenkelementen (4.3 bis 4.8) gebildet ist;
jedes Schwenkelement (4.3 bis 4.8) ist um eine achsparallele Schwenkachse unter Vergrößerung des Nabendurchmessers ausschwenkbar; wobei
die Nabe (4) ganz oder teilweise von einer dehnbaren Manschette umgeben ist.

2. Hydraulische Turbine oder Pumpturbine nach Anspruch 1, wobei
die Laufradnabe (4) aus wenigstens zwei axial nebeneinander liegenden, zueinander koaxialen Teilen (4.1, 4.2) aufgebaut ist;
wenigstens ein Nabenteil ist in axialer Richtung verschiebbar.

3. Hydraulische Turbine oder hydraulische Pumpe nach Anspruch 2, **gekennzeichnet durch** die folgenden Merkmale:
wenigstens ein Nabenteil (4.1, 4.2) ist um die Längsachse der Laufradnabe (4) verdrehbar;
dem Nabenteil (4.1, 4.2) oder der ganzen Nabe (4) ist ein Antrieb zugeordnet, der das Nabenteil (4.1, 4.2) oder die ganze Nabe (4) in eine Umdrehung versetzt, die bezüglich Drehzahl und/oder Drehrichtung von der Umdrehung des übrigen Laufrades (4) abweicht.

## Claims

1. Hydraulic turbine or hydraulic pump;
having an impeller (2), including a plurality of blades (3);
having an impeller hub (4);
at least one axial portion of the hub wall has a circumference face, which is formed like an iris diaphragm composed of swivel elements (4.3 to 4.8);
every swivel element (4.3 to 4.8) can be swivelled out around an axially parallel swivel axis by enlarging the hub diameter, whereas the hub (4) is surrounded total or partial by an extensible cuff.

2. Hydraulic turbine or pump turbine according to claim 1, whereas
the impeller hub (4) consists of at least two axial portions (4.1, 4.2) situated side by side, coaxial relative to one another;
at least one hub portion can be shifted in the axial direction.

3. Hydraulic turbine or hydraulic pump according to claim 2, **characterised by** the following features:
at least one hub portion (4.1, 4.2) can rotate around the longitudinal axis of the impeller hub (4);
a drive is associated with the hub portion (4.1, 4.2) or the whole hub (4), which drive brings the hub portion (4.1, 4.2) or the whole hub (4) into a rotation which differs from the rotation of the remaining impeller (4) in terms of rotational speed and/or rotational direction.

## Revendications

1. Turbine hydraulique ou pompe hydraulique;
ayant un disque de rotor (2), présentant une pluralité de pales (3); ayant un moyeu de disque de rotor (4);
au moins un tronçon axial de la paroi de moyeu présente une surface périphérique, conçue en forme de diaphragme d'iris composée d'éléments pivotants (4.3 à 4.8);
chaque élément pivotant (4.3 à 4.8) peut être sorti par pivotement autour d'un axe de pivotement parallèle axialement en agrandissant le diamètre de moyeu, où le moyeu (4) est entouré en tout ou partie d'une manchette extensible.

2. Turbine hydraulique ou turbine de pompe selon la revendication 1, où
le moyeu de disque de rotor (4) est constitué d'au moins deux portions axiales (4.1, 4.2) disposées l'une à côté de l'autre, coaxiales l'une par rapport à l'autre;
au moins une portion de moyeu est mobile axialement.

3. Turbine hydraulique ou pompe hydraulique selon la revendication 2, présentant les caractéristiques suivantes:
au moins une portion de moyeu (4.1, 4.2) peut tourner autour de l'axe longitudinal du moyeu de disque de rotor (4);
un système d'entraînement est associé à la portion de moyeu (4.1, 4.2) ou bien à tout le moyeu (4), lequel système fait tourner la portion de moyeu (4.1, 4.2) ou l'ensemble du moyeu (4) dans un sens différent de la rotation du reste du disque de rotor (4) en termes de vitesse de rotation et/ou sens de rotation.
